# EUROPEAN PATENT APPLICATION

(11) **EP 4 465 179 A1**
(43) Date of publication of application: **20.11.2024**
(21) Application number: 23275078.6
(22) Date of filing: 18.05.2023
(51) Int. Cl.: G06F 11/07

(54) **FAULT DETECTION IN AN ONBOARD COMPUTING SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A computer implemented method of detecting a fault in an onboard computing system (200) comprising: recording a log of messages transmitted on a databus (101) of the onboard computing system for a rolling timespan (116) according to a rule (124) stored in a memory system of the onboard computing system; detecting a target message-transmission event associated with the rule; retrieving, in response to detecting the target event, the log of messages; determining whether the log complies with a valid digital chain associated with the rule, the valid digital chain comprising a group of messages associated with the target message-transmission event; and in response to the log failing to comply with the valid digital chain of the rule; storing or maintaining the log in a log database.

## Description

### FIELD

The present invention relates to fault detection in an onboard computing system.

### BACKGROUND

Onboard computing systems such as mission systems of onboard vehicles may occasionally develop faults within their software. Such faults may generally be classed into two categories; a first category where a user inputs a command into the onboard computing system and the expected output fails to materialise or a different output to that which was expected is outputted by the onboard computing system and a second category of faults wherein an un-commanded output is issued from the onboard computing system. Such faults can be benign or may be extremely dangerous depending on the use case of the onboard computing system.

Typically, onboard computing systems, especially those used on vehicles such as aircraft, are standalone i.e. not networked to maintain the integrity of the computing system. The integrity of the onboard computing system is especially important in the context of the computing system handling safety related decisions e.g. a mission system or autopilot system of an aircraft. As such, real time fault diagnosis by a user of the system or an external off-board device e.g. a ground station, is not possible until after an error has occurred and usually only possible when the vehicle on which the on-board computing system resides, returns to a maintenance base for post fault analysis.

In order to identify and diagnose a fault in an onboard computing system, the onboard computing system may be configured to produce data logs showing all messages transmitted by various system components within the onboard computing system. Such data logs may be extremely large and often require a significant amount of time to locate the source of the fault within the onboard computing system and diagnose the root cause of the fault.

It is an example aim of example arrangements of the present invention to at least partially avoid or overcome one or more disadvantages of the prior art, whether identified herein or elsewhere, or to at least provide an alternative to existing fault detection methods.

### SUMMARY

According to an aspect of the present invention, there is provided a computer implemented method of detecting a fault in an onboard computing system, comprising: recording a log of messages transmitted on a databus of the onboard computing system for a rolling timespan according to a rule stored in a memory system of the onboard computing system; detecting a target message-transmission event associated with the rule; retrieving, in response to detecting the target event, the log of messages; determining whether the log complies with a valid digital chain associated with the rule, the valid digital chain comprising a group of messages associated with the target message-transmission event; and in response to the log failing to comply with the valid digital chain of the rule: storing or maintaining the log in a log database.

The or each rule may comprise a target message-transmission event, a valid digital chain comprising a group of messages associated with the target message-transmission event and a rolling timespan.

Optionally, the method further comprises the step of, in response to the log complying with the valid digital chain of the rule: discarding the log from the log database.

Optionally, the method further comprises the step of determining whether the log complies with a valid digital chain of a second rule in response to failing to comply with the first rule.

Optionally, wherein the method further comprises recording the log of messages transmitted on the databus for a rolling timespan according to the first or second rule, the timespan configured to be the greater of the two timespans associated with the first and second rules.

Optionally, the method further comprises the step of notifying a user of the onboard computing system if the log fails to comply with the valid digital chain of the rule.

Optionally, the method further comprises the step of identifying one or more messages within the log which fail to comply with the valid digital chain of the rule, if the log fails to comply with the valid digital chain of the rule.

Optionally, the method further comprises the step of recording the log of messages transmitted on the databus comprises creating a new entry in the log each time a message is transmitted on the databus.

Optionally, the method further comprises the step of allocating a timestamp against each new entry in the log.

Optionally, the time stamp is configured to be recorded as coordinated universal time (UTC), a local time or a time beginning from a predetermined zero-time.

Optionally, wherein the step of determining whether the log complies with the valid digital chain , the method further comprises checking the order of the group of messages in the log according to the respective timestamps.

Optionally, wherein the step of recording the log further comprises the step of generating a memory stack within the log for each type of message transmitted on the databus.

According to a second aspect, there is provided a fault detection system comprising a data processing apparatus and a memory system comprising computer-readable instructions which, when executed by the data processing apparatus causes the data processing apparatus to perform the method of the first aspect.

According to a third aspect, there is provided an onboard computing system having a plurality of system components and a databus, wherein the system components are configured to transmit messages via the databus, wherein the system includes a data processing apparatus and a memory system comprising computer-readable instructions which, when executed by the data processing apparatus causes the data processing apparatus to perform the method of the first aspect.

According to a fourth aspect, there is provided a vehicle comprising the onboard computing system of the third aspect wherein optionally the vehicle is an aircraft.

According to a fifth aspect, there is provided a computer program comprising instructions which, when the program is executed by a computer, causes the computer to carry out the method according to the first aspect.

According to a sixth aspect, there is provided a computer implemented method of detecting a fault in an onboard computing system comprising: determining a rule comprising a target message transmission event, a valid digital chain comprising a group of messages associated with the target message transmission event and a rolling timespan (116); uploading the rule to a memory system of the onboard computing system; recording a log of messages transmitted on a databus (101) of the onboard computing system for the rolling timespan (116) according to the rule (124); detecting the target message-transmission event associated with the rule; retrieving, in response to detecting the target event, the log of messages; determining whether the log complies with a valid digital chain associated with the rule, the valid digital chain comprising a group of messages associated with the target message-transmission event; and in response to the log failing to comply with the valid digital chain of the rule; storing or maintaining the log in a log database.

Optionally, the method further comprises the step of downloading the recorded log from the onboard computing system.

Optionally, the method further comprises the step of identifying one or more messages within the log which fail to comply with the valid digital chain of the rule, if the log fails to comply with the valid digital chain of the rule.

Optionally, the method further comprises the step of restarting a system component of the onboard computing system associated with the message which failed to comply with the valid digital chain of the rule.

Optionally, the method further comprises the step of disabling a system component of the onboard computing system associated with the message which failed to comply with the valid digital chain of the rule.

Optionally, the method further comprises the step of, in response to the log complying with the valid digital chain of the rule; discarding the log from the log database.

Optionally, the onboard computing system is a mission system and wherein the rule is uploaded to the fault detection module as part of a mission data pack.

Optionally, the method further comprises the step of determining whether the log complies with a valid digital chain of a second rule in response to failing to comply with the first rule.

Optionally, the method further comprises the step of recording the log of messages transmitted on the databus for a rolling timespan according to the first or second rule, the timespan configured to be the greater of the two timespans associated with the first and second rules.

Optionally, wherein in response to the log failing to comply with the rule, the method further comprises the step of notifying a user of the onboard computing system.

Optionally, wherein in response to the recorded log failing to comply with the rule, the method comprises the additional step of transmitting the log to an external off-board device.

According to a seventh aspect, there is provided an onboard computing system having a plurality of system components and a databus, wherein the system components are configured to transmit messages via the databus, wherein the system includes a data processing apparatus and a memory system comprising computer-readable instructions which, when executed by the data processing apparatus causes the data processing apparatus to perform the method according to the sixth aspect.

According to an eighth aspect, there is provided a vehicle comprising the onboard computing system of the seventh aspect wherein optionally the vehicle is an aircraft.

According to a ninth aspect, there is provided a computer program comprising instructions which, when the program is executed by a computer, causes the computer to carry out the method according to the sixth aspect.

### BRIEF DESCRIPTION OF THE FIGURES

Embodiments of the invention will now be described by way of example only with reference to the figures, in which:
Figure 1 shows an example schematic of a valid digital chain;
Figure 2 shows a schematic overview of an example of an onboard computing system according to the invention;
Figure 3 shows a schematic diagram of an example fault detection system;
Figure 4 shows an alternative arrangement of the fault detection system;
Figure 5 shows an example memory stack according to the invention;
Figure 6 shows a plurality of memory stacks of the fault detection system;
Figure 7 shows an example of an invalid digital chain;
Figure 8 shows a vehicle comprising the onboard computing system;
Figure 9 shows a schematic diagram showing a rule tailoring stage and fault analysis stage in context with the onboard computing system;
Figure 10 shows a flow diagram of an example method of operation of the onboard computing system; and
Figure 11 shows a flow diagram of an example method of operation of detecting a fault in an onboard computing system.

### DETAILED DESCRIPTION

This specification describes methods, apparatus and systems for detecting faults within onboard computer systems. In general, an onboard computing system may comprise a plurality of system components (such as computing devices) arranged to transmit messages over a databus to another system component or memory system within the onboard computing system. The messages are discrete pieces of data and may relate to the status of the transmitting system component or relate to functions, queries etc. destined for other system components or memory systems within the onboard computing system. In general, the invention monitors these messages transmitted on the databus within the onboard computing system to check for faults. The onboard computing system may be embedded on a platform e.g. a vehicle. The onboard computing system may be standalone and not routinely connected to external networks.

The system components may be configured to periodically transmit messages on the databus. This is known as a refresh rate or refresh cycle. For example, one system component may be configured to transmit a message every 80ms whereas another system component may be configured to transmit a message every 50ms. The refresh rate of each system component is determined according to the manufacturer of the individual system components, the needs of the system in which the system component is used or the protocol/standard to which the system component is operating. For example, in the context of an aircraft system, a system component handling avionics control inputs may refresh at a faster rate than a system component handling radar information. In general, the messages transmitted by the system components will be the same until a command is received by the onboard computing system, either from a user of the computing system or another system component within the onboard computing system. For example, a system component may periodically transmit on the databus that it is in an 'OFF' state until a message in the form of a query requires the system component to be turned `ON' whereupon at the next fresh cycle, the system component will transmit 'ON' on the databus. This change in message is an example of a message-transmission event. Every time a message changes status, e.g. from 'OFF' to 'ON', there is a digital chain of messages associated with the change in a particular message. For example, the system component which has been requested to turn `ON' will have received a message (generally a few milliseconds beforehand) from another system component querying whether or not the particular system component was 'ON' beforehand. Such a chain of messages transmitted across the databus is called a 'valid digital chain' or 'digital thread' if it reflects expected operation of the system. Every message-transmission event in the onboard computing system will comprise a valid digital chain. In other words, if every message-transmission event is an 'effect', there is a known predetermined 'cause'. In alternative arrangements, the message-transmission event may be a pattern of messages transmitted on the databus. In another arrangement, the message-transmission event may be the absence of one or more messages being transmitted on the databus.

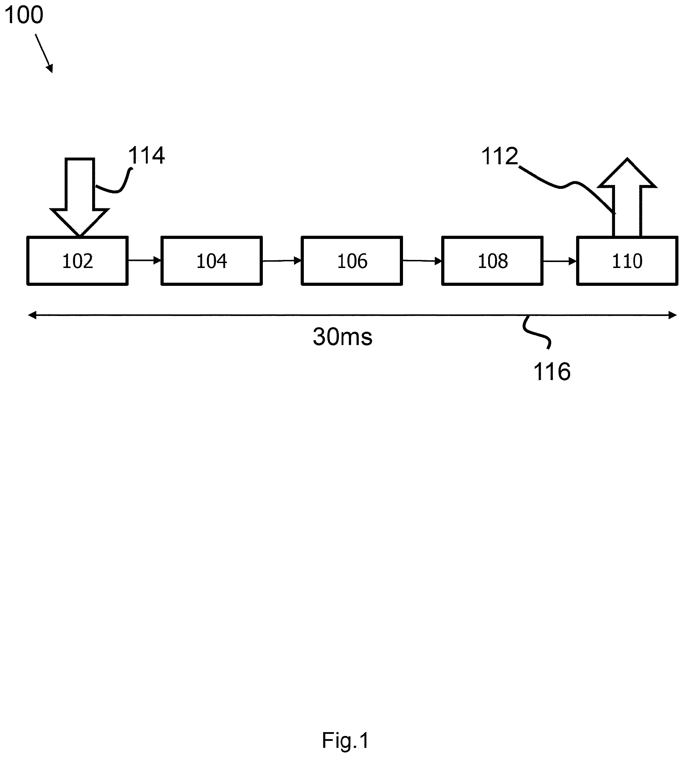

Figure 1 schematically illustrates a valid digital chain 100 which involves a first system component 102, a second system component 104, a third system component 106, a fourth system component 108 and a fifth system component 110. At the end of the chain 100 is a message-transmission event 112. In this example, the event is a message changing status in the onboard computing system e.g. a system component changing from 'OFF' to 'ON'. In this example, the event 112 is associated with the fifth system component 110. The event 112 has a known cause 114 according to a valid digital chain. In this example, the cause is associated with the first system component 102. In order for the event 112 to be valid in this example, the first system component 102 must send a message to the second system component 104, then a message is sent to the third system component 106, then to the fourth system component 108 and finally to the fifth system component 110 whereupon the event 112 occurs. Therefore, the valid digital chain 100 effectively shows a group of messages associated with the event 112 in order for the event 112 to be valid. In some examples, there may be more than one valid digital chain associated with a particular event 112. In other words, there may be more than one valid cause 114 or path through the various system components in the onboard computing system that can cause a particular event 112.

If a message-transmission event occurs which does not conform to the valid digital chain, that is to say an event 112 has occurred with no apparent 'cause' 114 and/or the path associated between the cause 114 and event 112 does not conform to the valid digital chain 100, an error has occurred in the onboard computing system.

The present inventors have realised when attempting to ascertain if a valid digital chain 100 is present in an onboard computing system in response to a message-transmission event 112, all messages transmitted on the databus must be recorded for a continuous rolling timespan such that when an event occurs, all messages transmitted on the databus immediately preceding the message-transmission event 112 (i.e. in the time leading up to the event), can be further analysed to ascertain if the digital chain 100 for the event 112 is valid. This presents a technical challenge, as to record all messages transmitted on the databus (and often multiple databuses) from a plurality of system components/memory systems in the onboard computing system generates very large volumes of data. Furthermore, post processing of this data by forensic analysis is extremely time consuming in order to detect if a valid digital chain is present for each and every message transmission event in the onboard computing system.

Accordingly, the present inventors have devised a method of detecting a fault in onboard computing systems. In general, the method comprises recording a log of messages transmitted on the databus of the onboard computing system for a rolling timespan according to a rule stored in a memory system of the onboard computing system. The rule may be predefined prior to running the onboard computing system. The rule determines that a particular message transmission event (herein target message-transmission event) should be monitored within the onboard computing system. For the avoidance of doubt, the target message-transmission event of the rule corresponds to at least one type of message known to be transmitted on the databus by the plurality of system components. As will be described later, several rules may be implemented simultaneously thus several target message-transmission events may be monitored simultaneously within the onboard computing system.

The present inventors have realised that every message-transmission event in an onboard computing system comprises a timespan 116 associated with a valid digital chain 100. The timespan 116 is the maximum length of time required for a command to be received by the onboard computing system through to the message transmission event occurring and being transmitted on the databus at the next refresh cycle of the relevant system component. The timespan 116 associated with each message e.g. from 'cause' 114 to event 112, is always known. Therefore, a rule may determine that messages transmitted on the databus 101 of the onboard computing system should be recorded as a log over a particular rolling timespan 116 associated with the target message-transmission event for the rule, and stored in a memory system in the onboard computing system. In the example shown in Figure 1, the timespan 116 associated with the digital thread 100 is 30ms between cause 114 and event 112. In this way, a log of all messages transmitted on the databus over the last timespan 116 (30ms) is kept. That is, the log is recorded for a rolling timespan according to the rule.

When a target message-transmission event associated with a rule occurs, the log of all messages transmitted on the databus for the rolling timespan 116 associated with the rule is retrieved from the memory system and analysed to determine whether the log complies with the valid digital chain 100 associated with the rule. If the log fails to comply with the rule, the log is stored in a log database for further evaluation. In this way, errors within the onboard computing system may be quickly identified and diagnosed.

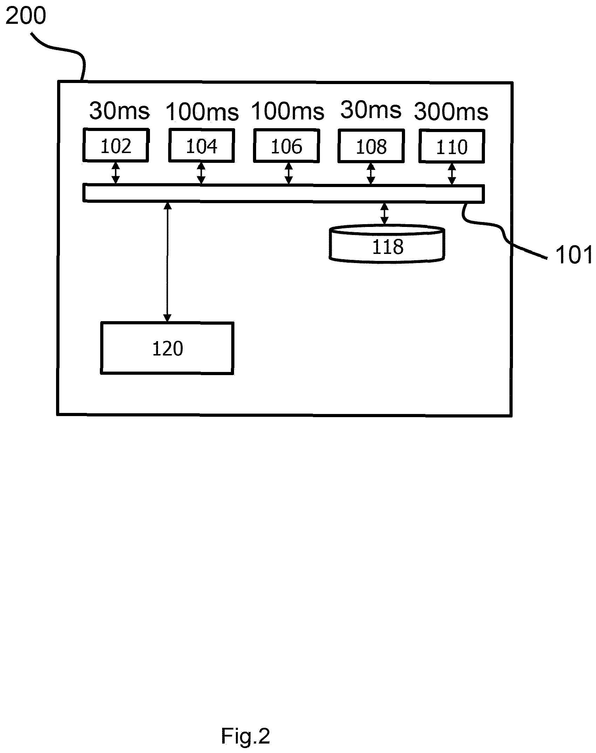

Figure 2 shows a schematic overview of an example of an onboard computing system 200 according to the invention. The onboard computing system 200 comprises a databus 101 communicatively connected to a plurality of system components including a first system component 102, a second system component 104, a third system component 106, a fourth system component 108 and a fifth system component 110. Whereas in this example five system components are shown, the exact number of system components is considered non limiting to the invention. In general, there may be provided at least one system component communicatively connected to the databus 101. Similarly, there may be provided more than one databus 101 in the onboard computing system 200. For example the first 102 and second 104 system components may be connected by a first databus and the second 104 and third 106 system components may be connected by a second databus. The databuses may overlap certain system components such that a system component may be connected to more than one databus simultaneously. The exact arrangement of system components and databuses will be dictated by the design of the onboard computing system.

Each of the plurality of system components 102-110 may be associated with a line replaceable item (LRI). An LRI may be interchangeably referred to as a line replaceable unit (LRU). An LRI is a standalone device or 'blackbox' configured to perform a particular function within the onboard computing system 200. LRI's may be selectively removed from the onboard computing system 200 such that they may be described as 'plug and play'. In the context of an onboard computing system on an aircraft, the first system component 102 may be a LRI handling a radar, the second system component 104 an autopilot system, a third system component 106 may be an environmental control system etc.

Each of the plurality of system components may comprise their own computer processing unit (CPU) (not shown) and/or memory (not shown). In some examples, one or more system components of the plurality of system components may share a common CPU and/or memory.

In this example, there is also provided a memory system 118 separate to that of the plurality of system components 102-110, although in other examples the memory system may be included as or in a system component. The memory system 118 is communicatively connected to the databus 101. The memory system 118 may be a central global recorder configured to store information such as messages from the plurality of system components via the databus 101. Similarly, the plurality of system components may be able to retrieve information from the memory system 118 via the databus 101. The memory system 118 may be an LRI. The memory system 118 may be removable from the onboard computing system 200.

The operation of the onboard computing system 200 will now be described. As described before, the plurality of system components are arranged to periodically transmit a message on the databus 101. Each of the plurality of system components may be arranged to transmit more than one type of message on the databus 101. Each of the plurality of system components may be arranged to periodically transmit a message on the databus 101 at the same refresh rate or at different refresh rates to each other. In this example, the first system component 102 is configured to refresh at a rate of 30ms, the second system component 104 and third system component 106 at 100ms, the fourth system component 108 at 30ms and the fifth system component 110 at 300ms.

The databus 101 is a communication system arranged to transfer the messages between the plurality of system components and/or the memory system 118. The databus may comprise a plurality of wires and connectors that provide transportation of the messages between the plurality of system components and/or memory system 118. The databus may be a parallel or serial bus. The databus may be an avionics databus, for example a databus manufactured according to ARINC 429 or MIL-STD 1553.

The onboard computing system 200 may also comprise a fault detection system 120 communicatively connected to the databus 101. The fault detection system 120 is configured to monitor the messages transmitted on the databus 101. The fault detection system 120 may be separate to or included within the system components 102-22. For example the fault detection system 120 may comprise a standalone unit comprising a data processing apparatus and a memory system or may alternatively be configured to use a data processing apparatus and memory system of the wider onboard computing system 200 via the databus 101. For example, the fault detection system 120 may be configured to use the data processing apparatus of one or more of the plurality of system components and/or the memory store 118. The memory system may comprise computer -readable instructions which when executed by the data processing apparatus, causes the data processing apparatus to perform the method as herein described.

Whereas the fault detection system 120 is described as carrying out the method for illustrative purposes, this is considered non limiting and the method may be executed by the onboard computing system 200 without a fault detection system 120 present. For example, one or more system components may be configured to carry out the fault detection method herein described.

The fault detection system 120 may itself by an LRI configured to be selectively removed from the onboard computing system 200. In some arrangements where there are a plurality of databuses 101, the fault detection system 120 is communicatively connected to the plurality of databuses 101 and further configured to monitor the messages transmitted on the plurality of databuses 101. The operation of the fault detection system 120 will now be described.

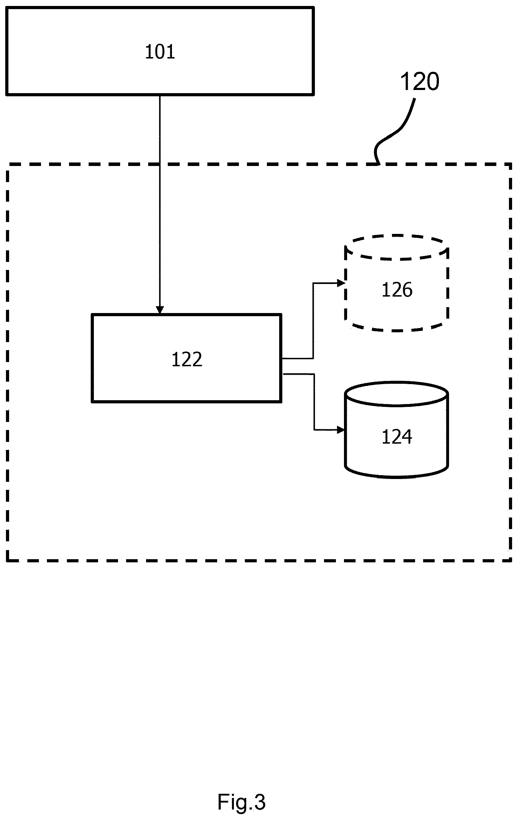

Figure 3 shows a schematic diagram of an example fault detection system 120. The fault detection system 120 comprises data processing apparatus 122 and a memory system 124. The fault detection system may further comprise a log database 126. The log database is configured to store any log which fails to comply with the valid digital chain defined by the rule. In this example, the log database 126 is located within the fault detection system 120 although as will be explained later, the log database 126 may be external to the fault detection system 120.

The memory system 124 stores the rule. The rule comprises three elements. Firstly, the rule defines the target message-transmission event to be detected on the databus 101. The second element of the rule is the timespan 116 associated with the target message-transmission event. The third element of the rule is the valid digital chain comprising a group of messages associated with the target message-transmission event. The rule may be predefined prior to running the onboard system 200. The rule may optionally be uploaded to the memory system 124 within the fault detection system 120 prior to running the onboard system 200. As described before, the timespan 116 of the valid digital chain 100 associated with each target message-transmission event is always known. Therefore, only those messages transmitted on the databus 101 during the rolling timespan 116 need to be recorded.

For example, the rule may require a target message-transmission event to be monitored which has a valid digital chain 100 known to take a maximum of 120ms. Accordingly, any message transmitted on the databus 101 which is older than 120ms is not relevant to the valid digital chain of the target message transmission event. Thus, any message transmitted on the databus 101 which is older than the rolling timespan 116 may be discarded. In this way, memory requirements of the fault detection system are greatly reduced. Further, the present inventors have realised that post event analysis of a fault occurring is greatly reduced as the fault detection system 120 only holds the relevant messages needed for identification and diagnosis of a fault instead of all messages recorded since the onboard computing system 200 began transmitting messages on the databus 101 e.g. on initial start of the onboard computing system.

The operation of the fault detection system 120 will now be described in more detail. As before described, the fault detection system 120 is configured to detect a target message-transmission event on the databus 101 associated with the rule. When the fault detection system 120 detects a target message-transmission event associated with the rule, the fault detection system 120 is configured to retrieve the log from the memory system 124 and determine if the log complies with the valid digital chain associated with the rule. If the log fails to comply with the rule, i.e. the recorded log does not match the group of messages associated with the target message-transmission event, a fault has occurred within the onboard computing system 200.

If (e.g. only if) the log fails to comply with the rule, the log may be stored in the log database 126. Alternatively, the log may be stored in the log database 126 when it is initially recorded, and maintained (i.e. kept) in the log database if the log fails to comply with the rule. In the case that the log is stored in the log database 126 when it is initially recorded, it may be discarded from the log database 126 if the log is found to comply with the rule.

More generally, in response to the log failing to comply with the rule, the fault detection system 120 is configured to store or maintain the log in the log database 126 thereby allowing forensic analysis of the recorded log to identify and diagnose the fault. Optionally, when the log complies with the rule, that is to say the log comprises the group of messages of the valid digital chain associated with the target message-transmission event, the log may be discarded from the log database 126 i.e. there is no fault in the onboard computing system 200.

In this way, the memory requirements of the log database 126 are greatly minimised and only logs identifying faults within the onboard computing system 200 are kept for further analysis.

In one arrangement, in response to the log failing to comply with the valid digital chain of the rule, a user of the onboard computing system 200 is notified. Notification of the user may be carried out by the fault detection system 120 or another system component within the onboard computing system 200. For example, the onboard computing system 200 may comprise a graphical user interface (GUI) wherein upon detection of a fault by the fault detection system 120, a message or warning is shown to the user. Alternatively or additionally, a message may be transmitted from the onboard computing system 200 to an external off-board device outside the computing system 200. For example, a message may be transmitted to a base or groundstation to alert a mission controller or maintenance operator of the fault in the onboard computing system 200. In an alternative arrangement, the log may also be transmitted to an external off-board device outside the onboard computing system 200. In this way, real time fault identification and diagnosis and possibly rectification may take place whilst the onboard computing system 200 continues to operate.

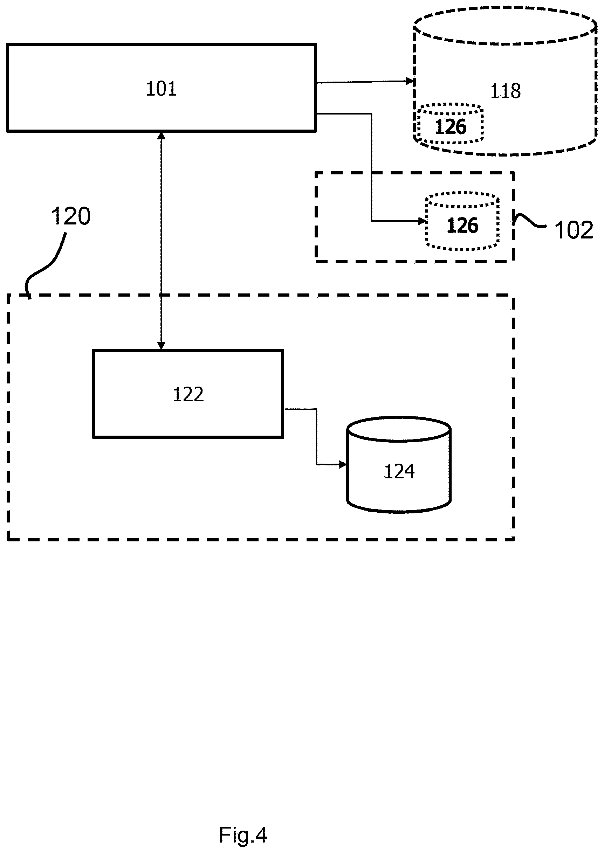

Figure 4 shows an alternative arrangement of the fault detection system 120. In this example, the databus 101 and memory system 124 are as described in relation to Figure 3 and their function will not be repeated here for brevity. In this arrangement, the log database 126 is located outside the fault detection system 120. For example, the log database 126 may be part of one of the plurality of system components e.g. the first system component 102. Alternatively, the log database 126 may be part of the memory store 118. By using external available memory e.g. a system component 102 or memory store 118, computing and/or power requirements of the fault detection system 120 may be greatly reduced.

The method may further comprises the step of determining whether the log complies with a valid digital chain of a second rule in response to failing to comply with the first rule. In this way, multiple target message transmission events may be monitored on the databus 101. In this way, further searches for other faults within the onboard computing system 200 may be initiated in response to a first fault occurring. The present inventors have realised that this so called 'if this then that' functionality may be useful when it is known that a fault in one system component may cause one or more faults to occur in another related system component within the onboard computing system 200.

In one arrangement, there may be a plurality of rules. There may be a plurality of rules corresponding to the number of separate types of message transmission-events that may occur on the databus 101. In some cases, every message-transmission event on the databus 101 of the onboard computing system 100 may have an associated rule such that the onboard computing system 200 is fully monitored.

The method may further comprise the step of recording the log of messages transmitted on the databus 101 for a rolling timespan according to the first or second rule, the timespan configured to be the greater of the two timespans associated with the first and second rules. In this way, messages transmitted on the databus may be recorded for a rolling timespan 116 associated with the longest digital chain of the two or more rules. For example, if a first rule is configured to monitor a first target message-transmission event having a rolling timespan of 60ms (this value being the expected time for a valid digital chain 100 to occur throughout the onboard computing system 100 for the first target message-transmission event), and a second rule is configured to monitor a second target message-transmission event having a timespan of 120ms, the log will record the messages transmitted on the databus 101 for 120ms thereby ensuring a complete capture of all relevant messages by the fault detection system 120 and preventing `clipping' of the valid digital chain.

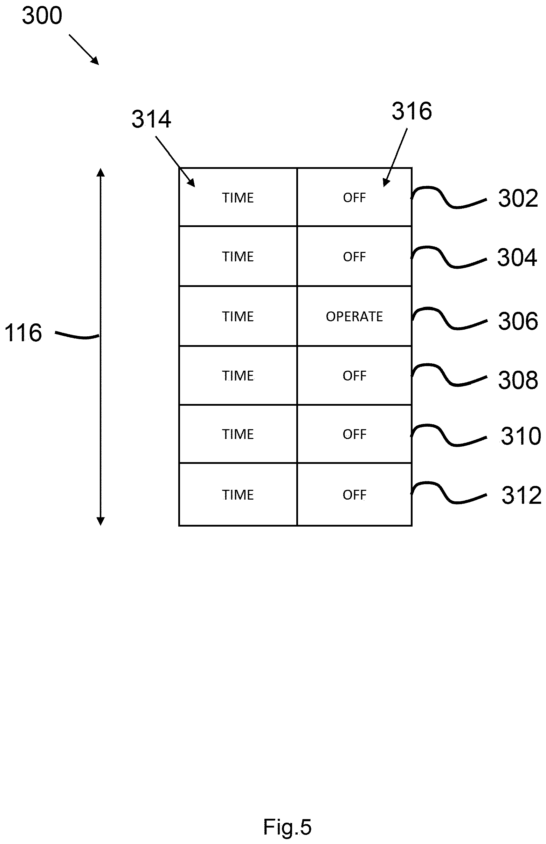

Figure 5 shows a log comprising a memory stack 300 according to the invention. The memory stack 300, is a series of recorded entries which capture a messages transmitted on the databus 101. The method may comprise a step of generating a memory stack 300 within the log for each type of message transmitted on the databus. In an alternative arrangement, a single memory stack 300 may be able to record a plurality of types of message transmitted on the databus.

Each time the message is transmitted on the databus, e.g. the relevant system component refreshes, a new entry is made in the memory stack 300.

Figure 5 shows a memory stack 300 comprising six entries, a first entry 302, a second entry 304, a third entry 306, a fourth entry 308, a fifth entry 310 and a sixth entry 312. The entries are stored in time order, that is to say the first entry 302 is the newest entry and the sixth entry 312 is the oldest entry. The six entries cover the rolling timespan 116 dictated by the rule. Each time a new entry is recorded, an oldest entry which is older than the rolling timespan 116 is discarded. In this way, the memory stack 300 only records and stores the messages during the rolling timespan 116.

The method may include allocating a timestamp 314 against each new entry in the log. The timestamp 314 may be recorded as coordinated universal time (UTC) i.e. Zulu time, a local time e.g. a time zone that the onboard computing system 200 is operating in, or a time beginning from a predetermined zero-time e.g. a mission start time wherein the time that the onboard computing system begins running is the zero time and subsequent time measurements are measured from this zero time. In this example, the memory stack 300 is configured to record one type of message which corresponds to the status of a system component within the onboard computing system 200. The sixth (oldest) entry 312 records the time 314 and the message as 'OFF'. Likewise, the fifth entry 310 and fourth entry 310 also record the time 314 and the message as 'OFF'. At the third entry 306, the time 314 is recorded and the message changes status to 'OPERATE'. At the second entry 304, the time 314 is again recorded and the message changes status to 'OFF'. Likewise, at the most recent first entry 302, the time 314 is recorded and the message remains as 'OFF'. Whereas the memory stack 300 has been shown as recording both the time 314 and message 316, in some arrangements only the message may be stored. For a better understanding of the operation of the fault detection system 120, the operation of the memory stacks 300 and the valid digital thread 100 will now be explained.

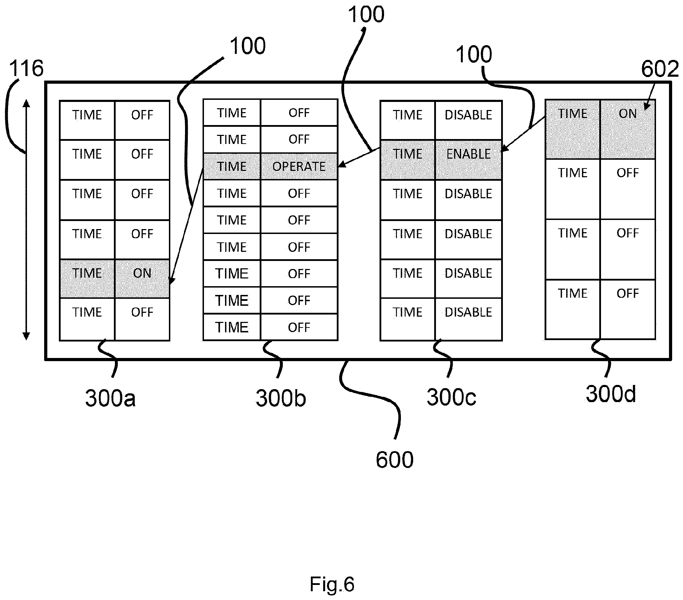

Figure 6 shows a log 600 comprising a plurality of memory stacks 300a-d. In particular, there is shown a first memory stack 300a, a second memory stack 300b, a third memory stack 300c and a fourth memory stack 300d. Each of the plurality of memory stacks 300a, 300b, 300c and 300d are assigned a particular type of message to record and store which is transmitted on the databus 101. In this example, the first memory stack 300a is assigned to record a message transmitted by the first system component 102, the second memory stack 300b is assigned to record a message transmitted by the second system component 104, the third memory stack 300c is assigned to record a message transmitted by the third system component 106 and the fourth memory stack configured to record a message transmitted by the fourth system component 108.

The plurality of memory stacks 300a-d continually record and store messages for a rolling timespan 116 according to the rule. In this example, each of the plurality of memory stacks comprise a different number of entries due to the respective refresh rate of the plurality of system components. For example, the first memory stack 300a comprises 6 entries (corresponding to 6 refresh cycles by the first system component 102 within the rolling timespan 116), the second memory stack 300b comprises 9 entries (corresponding to 9 refresh cycles by the second system component 104 within the rolling timespan 116), the third memory stack 300c comprises 6 entries (corresponding to 6 refresh cycles by the third system component 106 within the rolling timespan 116) and the fourth memory stack 300d comprises 4 entries (corresponding to 4 refresh cycles by the fourth system component 108 within the rolling timespan 116). The entries recorded by all the plurality of memory stacks 300a-d over the rolling timespan 116 are stored as a log 600 in the log database 126.

As has been described before, the rule determines the target message-transmission event to be detected. When the fault detection system 120 detects a target message transmission event on the databus 101 indicated by numeral 602, the fault detection system 120 retrieves the log 600 from the memory. The log is compared with the valid digital chain associated with the rule. Figure 6 shows the valid digital chain 100 comprising a group of messages associated with the target message transmission event (shown as shaded cells) extending between the plurality of memory stacks 300a-d. In this way, the fault detection system 120 can 'trace' back the change in messages from the fourth memory stack 300d to the first memory stack 300a. In this example the digital chain is valid and thus the target message transmission event occurred in normal operation of the onboard computing system 200 i.e. no error occurred. Optionally at this point, the log 600 is discarded from the log database 126.

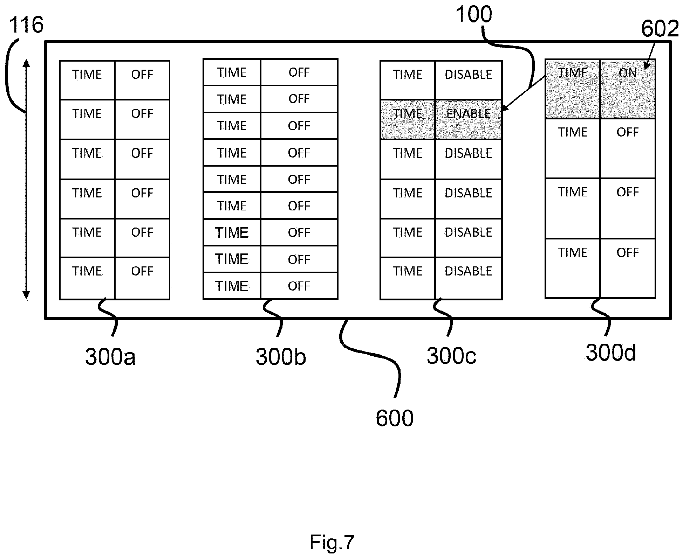

Figure 7 shows an example of an invalid digital chain. In this example, the plurality of memory stacks (300a-d) are as Figure 6 and their function and respective messages/system components are unchanged and shall not be repeated here for brevity. In response to target message transmission event being detected, the log 600 is retrieved from the memory and compared with the rule. In this example it can be seen that the valid digital chain 100 extends from the fourth memory stack 300d to the third memory stack 300c only. Two messages of the group of messages associated with the target message transmission event are missing from the first and second memory stacks. Therefore an error has occurred in the onboard computing system 200 as the log fails to comprise the group of messages associated with the target message transmission event.

In some arrangements, in response to the log 600 failing to comply with the rule, the fault detection system 120 is configured to identify which message within the log failed to comply with the rule. In this example, the second entry of the third memory stack 300c failed to comply with the rule. In this way, the fault may be quickly identified and rectified. As was described before, such information may be transmitted to a user or external off-board device outside the onboard computing system 200.

In some arrangements, the step of checking whether the log 600 complies with the valid digital chain further comprises checking the order of the group of messages in the log 600 according to the respective timestamps 314.

In some arrangements, the method comprises the further step of restarting a system component of the onboard computing system 200 associated with the message which failed to comply with the valid digital chain 100 of the rule. For example, if a message transmitted by the second system component 104 failed to comply with the valid digital chain 100 of the rule, the second system component 104 may be restarted. Restarting the offending component may cause the fault to be cleared from the onboard computing system 200.

In an alternative arrangement, the method comprises the further step of disabling a system component of the onboard computing system 200 associated with the message which failed to comply with the valid digital chain 100 of the rule. This may be advantageous where a component has become permanently compromised due to physical damage or malfunction e.g. a malware bug within the offending component.

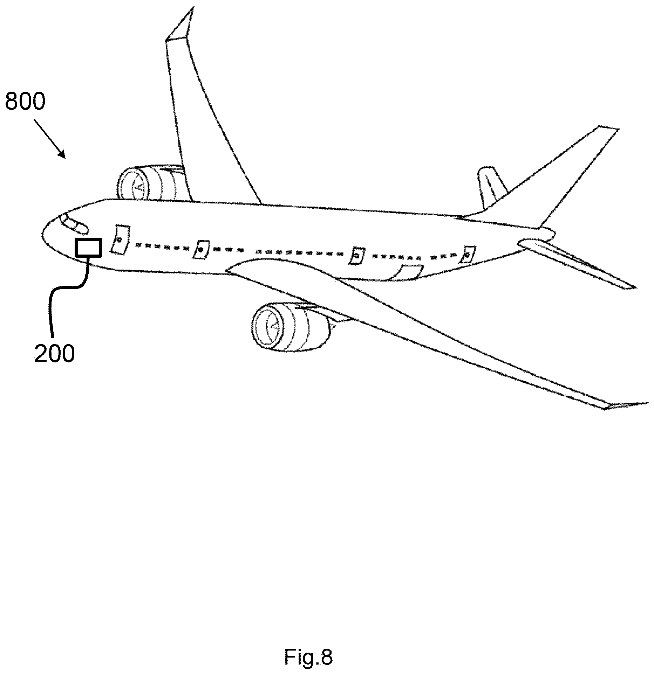

Figure 8 shows a vehicle 800 comprising the onboard computing system 200 as herein described. In this example the vehicle 800 is an aircraft. The onboard computing system may be part of a mission system of the vehicle. There may be provided more than one onboard computing system 200 on the vehicle. Whereas an aircraft is shown in Figure 8, this is considered non limiting and the invention finds applicability to any manner of land, sea, air or space vehicle.

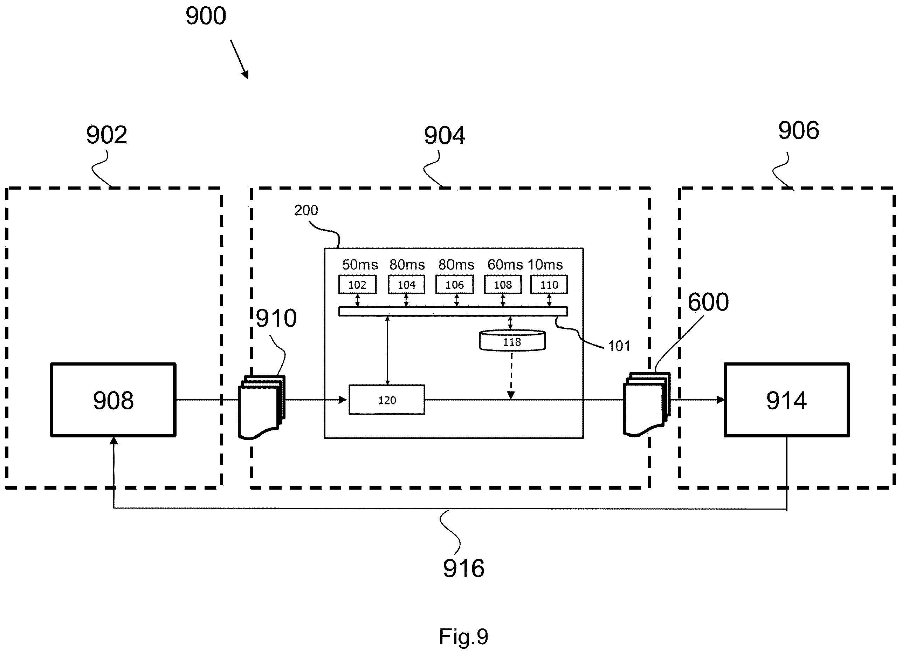

Figure 9 shows a schematic diagram 900 showing a rule tailoring stage and fault analysis stage in context with the onboard computing system 200. In particular there is shown a first offboard rule tailoring stage 902, a second onboard deployment stage 904 and a third offboard fault analysis stage 906. The first offboard rule tailoring stage 902 comprises a mission data toolset 908 configured to generate a mission data pack 910 for upload to the onboard computing system 200. In general, the mission data toolset 908 is a software package. The toolset 908 is configured to define the rule (or plurality of rules) that will be used in the onboard computing system 200. In particular, the toolset 908 may be configured to define the target message-transmission events which are to be detected in the onboard computing system 200 and define the valid digital chain 100 comprising the group of messages associated with the target message transmission event. The toolset 908 may be able to generate other instructions for the onboard computing system 200 such as instructions for the plurality of system components or other relevant data e.g. navigation information, targeting information, stores information etc. Once the mission data pack 910 has been generated, the pack is uploaded to the onboard computing system 200 at the onboard deployment stage 904. At this stage, any rules held in the mission data pack 910 are uploaded to memory system of the onboard computing system.

After a fault has occurred in the onboard computing system 200, the log 600 is transferred from the log database 126 to an external off board device 914 at the third off-board fault analysis stage 906. In this example, the external off-board device is a forensic toolset 914. The forensic toolset 914 is a computer programme configured to analyse the recorded log 600 and identify and diagnose the fault within the onboard computing system 200. The recorded log 600 may be transferred from the onboard computing system 200 after the system has ceased running or transmitted immediately after a fault has been detected. For example, in the context of an onboard computing system 200 on an aircraft, the recorded log 600 may be transferred to external off-board device after landing.

The forensic toolset 914 may comprise a feedback loop 916 to the mission data toolset 908 such that in response to diagnosing faults in the onboard system, new rules may be created by the mission data toolset 908 for upload to the fault detection system 120.

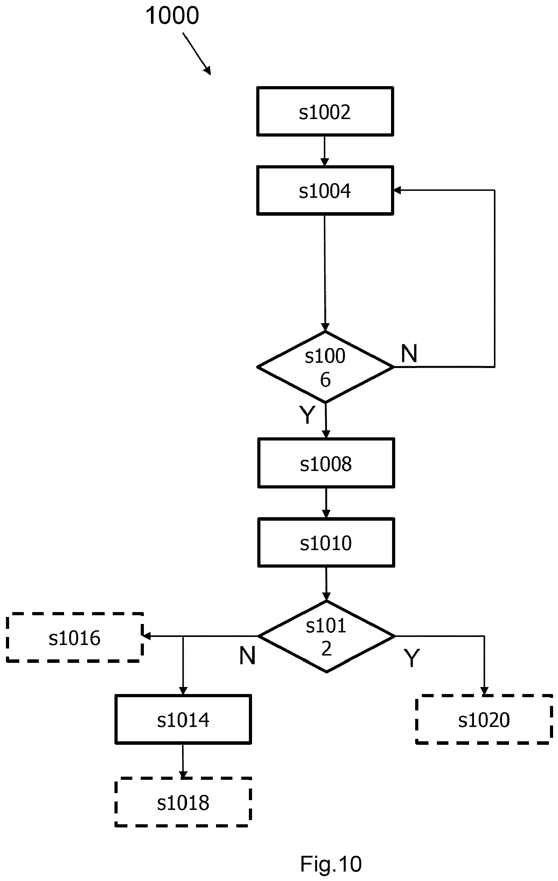

Figure 10 shows a flow diagram 1000 of an example method of detecting a fault in an onboard computing system.

At step s1002, the onboard computing system is run.

At step s1004, a log of messages transmitted on the databus is recorded for a rolling timespan and stored in a memory system of the onboard computing system. The log comprises a plurality of memory stacks wherein each memory stack records a particular type of message transmitted on the databus.

At step s1006, the fault detection system checks whether a target message transmission event has occurred. In response to no target message transmission event occurring, the method proceeds to step s1004 and continues to record the messages for the rolling timespan, discarding entries which are older than the rolling timespan.

In response to detecting the target message-transmission event, the method proceeds to step 1008 wherein the log is retrieved from the memory system.

At step s1010, the log is compared with the valid digital chain associated with the rule.

At step s1012, a decision is made if the log complies with the rule.

In response to the log failing to comply with the rule, the log is saved to a log database at step s1014. Optionally at this step, the log is compared with the valid digital chain of a second rule in response to failing to comply with the first rule at step s1016.

Optionally, at step s1018, the log is transmitted to an external off-board device outside the onboard computing system or downloaded from the onboard computing system for further analysis as has been described before.

Optionally, in response to the log complying with the rule at step s1020, the log is discarded from the log database.

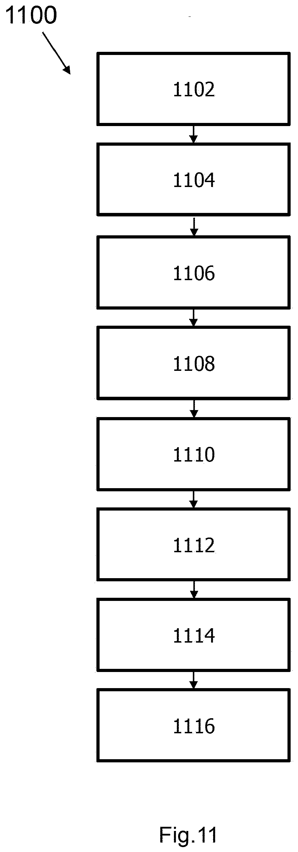

Figure 11 shows a flow diagram 1100 of an example method of operation of detecting a fault in an onboard computing system comprising the steps of:
1102 determining a rule comprising a target message transmission event, a valid digital chain comprising a group of messages associated with the target message transmission event and a rolling timespan;
1104 uploading the rule to a memory system of the onboard computing system;
1106 recording a log of messages transmitted on a databus of the onboard computing system for the rolling timespan according to the rule stored in the memory system of the onboard computing system;
1108 recording, using the plurality of memory stacks, the respective messages for the timespan according to the rule wherein the plurality of memory stacks are configured to store a new entry of the respective message each time the respective message is transmitted on the databus;
1110 detecting the target message-transmission event associated with the rule;
1112 retrieving, in response to detecting the target event, the log of messages from the memory;
1114 determining whether the log complies with a valid digital chain associated with the rule, the valid digital chain comprising a group of messages associated with the target message-transmission event;
1116 storing the log in a log database in response to the log failing to comply with the valid digital chain of the rule.

Whereas the system components have been described as individual devices within an onboard computing system, this is considered non-limiting and in some arrangements, the system components may be discreet objects or functions held within a single system component and connected via databus. Embodiments of the components described herein can be implemented using any suitable software applications, programming language, data editors, etc., and may be represented/stored/processed using any suitable data structures, and so on.

Attention is directed to any papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A computer implemented method of detecting a fault in an onboard computing system (200), comprising:
recording a log of messages transmitted on a databus (101) of the onboard computing system for a rolling timespan (116) according to a rule stored in a memory system of the onboard computing system;
detecting a target message-transmission event associated with the rule;
retrieving, in response to detecting the target event, the log of messages;
determining whether the log complies with a valid digital chain associated with the rule, the valid digital chain comprising a group of messages associated with the target message-transmission event; and
in response to the log failing to comply with the valid digital chain of the rule:
storing or maintaining the log in a log database.

2. The method of claim 1, further comprising:
in response to the log complying with the valid digital chain of the rule: discarding the log from the log database.

3. The method according to any preceding claim wherein the method further comprises determining whether the log complies with a valid digital chain of a second rule in response to failing to comply with the first rule.

4. The method according to claim 4 wherein the method further comprises recording the log of messages transmitted on the databus for a rolling timespan according to the first or second rule, the timespan configured to be the greater of the two timespans associated with the first and second rules.

5. The method according to any preceding claim further comprising notifying a user of the onboard computing system if the log fails to comply with the valid digital chain of the rule.

6. The method according to any preceding claim, wherein further comprising identifying one or more messages within the log which fail to comply with the valid digital chain of the rule, if the log fails to comply with the valid digital chain of the rule.

7. The method according to any preceding claim wherein the step of recording the log of messages transmitted on the databus comprises creating a new entry in the log each time a message is transmitted on the databus.

8. The method according to claim 7 wherein the method further comprises the step of allocating a timestamp against each new entry in the log.

9. The method according to claim 8 wherein the time stamp is configured to be recorded as coordinated universal time (UTC), a local time or a time beginning from a predetermined zero-time.

10. The method according to claims 8 or 9 wherein the step of determining whether the log complies with the valid digital chain further comprises checking the order of the group of messages in the log according to the respective timestamps.

11. The method according to any preceding claim wherein the step of recording the log further comprises the step of generating a memory stack within the log for each type of message transmitted on the databus.

12. A fault detection system comprising a data processing apparatus and a memory system comprising computer-readable instructions which, when executed by the data processing apparatus causes the data processing apparatus to perform the method of any one of claims 1 to 11.

13. An onboard computing system having a plurality of system components and a databus, wherein the system components are configured to transmit messages via the databus, wherein the system includes a data processing apparatus and a memory system comprising computer-readable instructions which, when executed by the data processing apparatus causes the data processing apparatus to perform the method of any one of claims 1 to 11.

14. A vehicle comprising the onboard computing system of claim 13 wherein optionally the vehicle is an aircraft.

15. A computer program comprising instructions which, when the program is executed by a computer, causes the computer to carry out the method according to any one of claims 1 to 11.
